# EUROPEAN PATENT APPLICATION

(11) **EP 4 306 622 A1**
(43) Date of publication of application: **17.01.2024**
(21) Application number: 23185200.5
(22) Date of filing: 13.07.2023
(51) Int. Cl.: C10G 1/00, C10G 1/10, C10G 65/04, C10G 67/02, C10G 67/08, C10G 69/02

(54) **METHOD AND APPARATUS FOR CONTINUOUSLY REFINING OF WASTE PLASTIC PYROLYSIS OIL**

(30) Priority: 14.07.2022 KR 20220086933
(71) Applicant: SK Innovation Co., Ltd., Seoul 03188 (KR); SK Geo Centric Co., Ltd., Jongno-gu Seoul 03161 (KR)
(72) Inventor: JEON, Hee Jung, 34124 Daejeon (KR); KIM, Ka Young, 34124 Daejeon (KR); KIM,, Ok Youn, 34124 Daejeon (KR); PARK, Young Moo, 34124 Daejeon (KR); LEE, Jae Hwan, 34124 Daejeon (KR)
(74) Representative: Frick, Robert

(57) **Abstract**

The present disclosure relates to a method and apparatus for continuous refining of waste plastic pyrolysis oil that can minimize process problems that occur in pyrolysis oil purification process, improve operational stability, and effectively reduce impurities such as chlorine and metal contained in the pyrolysis oil.

## Description

### TECHNICAL FIELD

The following disclosure relates to a method and an apparatus for the continuous refining of waste plastic pyrolysis oil.

### BACKGROUND

Waste plastics, which are produced using petroleum as a feedstock, are difficult to recycle and are mostly disposed of as garbage. These wastes are difficult to degrade in nature, and cause many environmental problems such as large amounts of air pollution and hazardous substances generated during an incineration process, which have become a social problem.

The biggest problem with plastics is that it is almost non-biodegradable. Plastics take hundreds of years to degrade and disappear in the natural environment, and in this process, the plastics are broken into fine pieces and turned into microplastics, which may cause various problems to organisms. Therefore, the importance of waste plastic treatment technologies has significantly increased. One of the ways to reuse waste plastics is to convert the waste plastics into oil through pyrolysis and replace the existing petroleum-based oil with such oil.

However, waste plastic pyrolysis oil may not be immediately used as a high-value-added fuel such as gasoline or diesel oil because it has a higher content of impurities such as chlorine and metals compared to oil produced from crude oil, and therefore, waste plastic pyrolysis oil needs to go through a refinery process.

As an example of a refining process, a refining process in which oil is hydrotreated in the presence of a hydrotreating catalyst and then a chlorine component contained in a product is adsorbed and removed by an adsorbent has been performed.

However, when oil reacts with hydrogen in the presence of a hydrotreating catalyst, an ammonium salt (NH₄Cl) is produced by a reaction with a chlorine compound such as hydrogen chloride and a nitrogen compound, which are produced together with the refined oil. The ammonium salt not only causes corrosion of a reactor and reduces durability, but also causes various process troubles such as generation of a differential pressure and a consequent reduction in process efficiency.

In addition, waste plastic pyrolysis oil is a mixture of hydrocarbon oils having various boiling points and various molecular weight distributions, and physical properties or characteristics of pyrolysis oil vary depending on the boiling points and molecular weight distributions. In particular, waste plastic pyrolysis oil exists in a wax or solid state at room temperature due to its high pour point, which makes it difficult to transport or store pyrolysis oil in the refining process, and causes various process troubles such as blockage of a reactor or pipe.

In order to solve the above problems, a method of reducing a molecular weight of waste plastic pyrolysis oil by a catalyst is known in the related art, but a flash point of pyrolysis oil is lowered, which causes safety problems during transportation or storage, and a lot of gas components are generated, which causes a reduction in recovery rate of pyrolysis oil. As another method, a reaction may be performed by supplying a certain amount of heat to a pyrolysis oil supply path to melt wax or solids, but there is a problem that it is difficult to transfer uniform heat due to the influence of an external temperature such as sub-zero weather or cold winter, and thus, a constant effect cannot be expected, and there is a problem that a reactor or pipe is blocked or process troubles occur due to wax or solids. In addition, a large amount of thermal energy is required because the entire pipe or reactor should be heated, transporting pyrolysis oil in a heated state is dangerous in terms of stability, and the pyrolysis oil is solidified again at the end of transportation.

Therefore, there is a demand for a method and an apparatus for continuously refining waste plastic pyrolysis oil that minimizes process troubles in a refining process for reducing impurities and improves quality of waste plastic pyrolysis oil. The problem to be solved by the present invention is the provision of such method and apparatus.

### SUMMARY

Against this background, the invention relates to a method for refining waste plastic pyrolysis oil, comprising a continuous flow of waste plastic pyrolysis oil through the following steps: a first step of introducing waste plastic pyrolysis oil into a first reactor and allowing an isodewaxing (IDW) reaction to proceed at a first temperature in the presence of a weak acid site catalyst, to obtain a first intermediate product; a second step of introducing the first intermediate product in the first step into a second reactor and hydrotreating the first intermediate product at a second temperature in the presence of a hydrotreating catalyst to allow a dechlorination reaction to proceed, to obtain a second intermediate product; and a third step of introducing the second intermediate product in the second step into a third reactor and hydrotreating the second intermediate product at a third temperature in the presence of a hydrotreating catalyst to allow a denitrification reaction to proceed, to obtain a refined waste plastic pyrolysis oil.

In an exemplary embodiment, the waste plastic pyrolysis oil has a pour point of 10°C or higher.

In an exemplary embodiment, the waste plastic pyrolysis oil includes 30 wt% or more of C10+ hydrocarbon oils having a boiling point of 180°C or higher and 30 vol% or more of olefins.

In an exemplary embodiment, the first step is controlled such that a pour point of the first intermediate product is -20 to 0°C.

In an exemplary embodiment, the weak acid site catalyst includes at least one catalyst selected from γ-Al₂O₃, Kaoline, TiO₂, and ZrO₂.

In an exemplary embodiment, the weak acid site catalyst has one or more of a BET specific surface area of 200 m²/g or more, an average pore size of 5 nm or more, and a total pore volume of 0.5 cc/g or more. When reference is made to BET specific surface areas herein, reference is made to values as determined according to ASTM C1069-09(2014). When reference is made to average pore sizes herein, reference is made to values as determined according to ASTM D4641-12. When reference is made to total pore volumes herein, reference is made to values as determined according to ASTM D4365-19.

In an exemplary embodiment, the first temperature is 250 to 450°C.

In an exemplary embodiment, the first step is performed under conditions of a reaction pressure of 5 to 70 bar and a gas/oil ratio (GOR) of 300 to 3,000 in an inert atmosphere.

In an exemplary embodiment, alpha-olefins in the waste plastic pyrolysis oil are converted into internal olefins through the first step. A weight loss during the conversion may be 5% or less.

In an exemplary embodiment, the second temperature is 100 to 300°C.

In an exemplary embodiment, the third temperature is 300 to 450°C.

In an exemplary embodiment, a reaction pressure in the hydrotreating in the second step, the third step, or in each of the second step and the third step is less than 100 bar.

In an exemplary embodiment, a ratio of liquid hourly space velocities (LHSVs) in the hydrotreating in the second step, the third step, or both the second and third steps is 1:0.1 to 1:0.8, preferably 1:0.2 to 1:0.7, more preferably 1:0.3 to 1:0.6.

The invention further relates to an apparatus for carrying out a method of the invention for continuous refining of waste plastic pyrolysis oil, wherein the apparatus includes: a first reactor configured to continuously receive waste plastic pyrolysis oil and allow the waste plastic pyrolysis oil to undergo an isodewaxing (IDW) reaction at a first temperature in the presence of a weak acid site catalyst; a second reactor configured to receive a first intermediate product from the first reactor and hydrogen gas and to allow the first intermediate product to undergo dechlorination by hydrotreating at a second temperature in the presence of a hydrotreating catalyst; and a third reactor configured to continuously receive a second intermediate product from the second reactor and hydrogen gas and to allow the second intermediate product to undergo denitrification by hydrotreating at a third temperature in the presence of a hydrotreating catalyst.

In an exemplary embodiment, the first reactor is a fixed bed reactor filled with a weak acid site catalyst.

In an exemplary embodiment, the second reactor, the third reactor, or both the second and the third reactor are fixed bed reactors filled with a hydrotreating catalyst.

Other features and aspects will be apparent from the following detailed description, the drawings, and the claims.

### BRIEF DESCRIPTION OF THE DRAWINGS

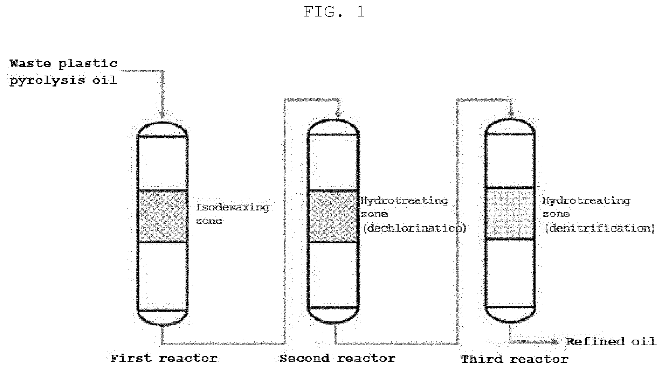

FIG. 1 illustrates an apparatus according to the present invention, including a first reactor, a second reactor, and a third reactor.

### DETAILED DESCRIPTION OF EMBODIMENTS

Unless otherwise defined, a unit of "%" and a unit of "vol%" used in the present specification refer to "wt%" and "vol%" at 1 atm and 25°C, respectively.

Unless otherwise defined, a unit of "ppm" used in the present specification refers to "mass ppm".

Unless otherwise defined, a boiling point (bp) used in the present specification refers to a boiling point at 1 atm.

Unless otherwise defined, an isodewaxing (IDW) reaction used in the present specification refers to a reaction including both a double bond position movement reaction and a structural isomerization reaction in an olefin.

Unless otherwise defined, the term "metal" includes both metalloids such as metal and silicon in an element state or an ionic state.

The present invention relates to a method for the continuous refining of waste plastic pyrolysis oil, the method including: a first step of introducing waste plastic pyrolysis oil into a first reactor and allowing an isodewaxing (IDW) reaction to proceed at a first temperature in the presence of a weak acid site catalyst, to obtain a first intermediate product; a second step of introducing the first intermediate product into a second reactor and hydrotreating the first intermediate product at a second temperature in the presence of a hydrotreating catalyst to allow a dechlorination reaction to proceed, to obtain a second intermediate product; and a third step of introducing the second intermediate product into a third reactor and hydrotreating the second intermediate product at a third temperature in the presence of a hydrotreating catalyst to allow a denitrification reaction to proceed, to obtain a refined waste plastic pyrolysis oil.

Through the isodewaxing (IDW) reaction in the presence of the weak acid site catalyst in the first step, a pour point of pyrolysis oil may be improved to 0°C or lower, and impurities such as chlorine and metals may be reduced. Waste plastic pyrolysis oil whose pour point is improved to 0°C or lower is introduced as a feedstock in the second step and the third step, such that process troubles may be prevented, which may improve operational stability. In addition, pyrolysis oil having improved low-temperature properties is introduced, such that impurities may be effectively removed and process troubles may be minimized even when the hydrotreating process is performed under milder conditions.

In addition, the first to third steps are continuously performed, a pour point of the waste plastic pyrolysis oil in the first step is improved to 0°C or lower, chlorine is first removed in the second step, and nitrogen is mainly removed in the third step, such that production and accumulation of an ammonium salt (NH₄Cl) in the reactor, which is a disadvantage of the hydrotreating process in the related art, may be minimized, thereby preventing blockage of the reactor. The refining process may be stably performed for a long time without process troubles, and a high-value-added oil having excellent low-temperature fluidity may be produced.

Specifically, the waste plastic pyrolysis oil may be a mixture of hydrocarbon oils produced by pyrolysis of waste plastics, and in this case, the waste plastics may be solid or liquid wastes related to synthetic polymer compounds such as waste synthetic resins, waste synthetic fibers, waste synthetic rubber, and waste vinyl. The mixture of hydrocarbon oils may include impurities such as a chlorine compound, a nitrogen compound, and a metal compound, in addition to the hydrocarbon oils, may include impurities in the form of compounds in which chlorine, nitrogen, or metal is bonded to hydrocarbons, and may include hydrocarbons in the form of olefins.

The waste plastic pyrolysis oil may include various impurities, and may contain, for example, 300 ppm or more of nitrogen, 30 ppm or more of chlorine, 30 ppm or more of a metal, 20 vol% or more of olefins, and 1 vol% or more of conjugated diolefins. The mixture of hydrocarbon oils present in the waste plastic pyrolysis oil may include H-Naphtha (to C8, bp < 150°C):Kero (C9 to C17, bp 150 to 265°C), Light Gas Oil (LGO) (C18 to C20, bp 265 to 340°C), and Vacuum Gas Oil (VGO) (from C21, bp 340 to 540°C), and Atmospheric Residue (AR) (bp > 540°C) at a weight ratio of 10:90 to 40:60 or 20:80 to 30:70.

In an exemplary embodiment of the present disclosure, the waste plastic pyrolysis oil may have a pour point of 10°C or higher, and may include 30 wt% or more of C10+ hydrocarbon oils having a boiling point of 180°C or higher and 30 vol% or more of olefins. As a content of hydrocarbon oils having a high boiling point increases, the pour point also increases. Specifically, when C10+ hydrocarbon oils having a boiling point of 180°C or higher are included in an amount of 30 wt% or more, the pour point is 10°C or higher and the waste plastic pyrolysis oil exists as a solid at room temperature, and more specifically, when hydrocarbon oils corresponding to wax having a boiling point of 340°C or higher are included in an amount of 30 wt% or more, the pour point is increased to 25°C or higher. Most of the olefins in the waste plastic pyrolysis oil are alpha-olefins, and have a linear hydrocarbon structure. In the low-temperature properties related to the pour point, the low-temperature properties vary depending on the hydrocarbon structure, and for example, the low-temperature properties vary in the order of Aromatic > Naphthene > Branched hydrocarbon > Linear hydrocarbon. Waste plastic pyrolysis oil is mainly formed of linear hydrocarbons, and thus has low-temperature properties that are relatively inferior to those of general crude oil having the same hydrocarbon distribution. That is, the waste plastic pyrolysis oil exists as a solid at room temperature due to its high pour point and high olefin volume (vol%), which causes various problems in terms of transportation or process stability.

Through the first step of allowing the isodewaxing (IDW) reaction of the waste plastic pyrolysis oil to proceed in the presence of the weak acid sites, the low-temperature properties related to the pour point of the pyrolysis oil may be improved, and impurities such as chlorine and metals may be reduced. The isodewaxing reaction is allowed to proceed in the presence of the weak acid sites, such that linear alpha-olefins in the waste plastic pyrolysis oil may be converted into linear internal olefins, and the low-temperature properties related to the pour point may be improved. In the related art, a strong acid point catalyst such as zeolite or clay has been used as a catalyst for converting linear alpha-olefins in various petroleum oils such as crude oil into linear internal olefins. However, an excessive amount of nitrogen (N), which is an impurity, is included in the waste plastic pyrolysis oil, which causes a fatal problem of deactivation of the strong acid point catalyst. Accordingly, in the present disclosure, the weak acid site catalyst is used, such that deactivation of the catalyst may be prevented and the pour point may be improved to 0°C or lower, unlike a strong acid point catalyst according to the related art. In addition, the weak acid site catalyst is used, such that impurities such as chlorine and metals included in the pyrolysis oil may be reduced.

In an exemplary embodiment of the present disclosure, a pour point of the product in the first step may be -30 to 0°C. A degree of double bond position movement and a degree of structural isomerization of olefins are controlled by controlling reaction temperature conditions or other conditions, such that the pour point may be improved. Specifically, the pour point may be -25 to 0°C, and more specifically, -20 to 0°C.

In an exemplary embodiment of the present disclosure, the weak acid site catalyst may include at least one catalyst selected from γ-Al₂O₃, Kaoline, TiO₂, and ZrO₂. Various weak acid site catalysts known in the related art may be used as long as the catalyst has a weak acid sites, and an appropriate weak acid site catalyst may be selected and used in consideration of a chain length distribution of the mixture of hydrocarbon oils included in the waste plastic pyrolysis oil, the presence or absence of isomers, a molecular size, and the like. Specifically, among the weak acid site catalysts, the weak acid site catalyst may be γ-Al₂O₃ or ZrO₂, and more specifically, may be γ-Al₂O₃.

In an exemplary embodiment of the present disclosure, the weak acid site catalyst may have at least a BET specific surface area of 150 m²/g or more, an average pore size of 5 nm or more, and a total pore volume of 0.3 cc/g or more. When a weak acid site catalyst satisfying the above ranges is used, the isodewaxing (IDW) reaction efficiency may be improved according to the specific surface area, pore size, and pore volume properties. Specifically, the BET specific surface area may be 180 to 400 m²/g (more specifically, 200 to 300 m²/g), the average pore size may be 6 to 20 nm (more specifically, 7 to 15 nm), and the total pore volume may be 0.4 to 2.0 cc/g (more specifically, 0.5 to 1.3 cc/g).

The weak acid site catalyst may improve the low-temperature properties related to the pour point of the pyrolysis oil, and may reduce a content of chlorine or metals in the pyrolysis oil as the weak acid site catalyst adsorbs impurities such as chorine and metals. In addition, the hydrotreating process in each of the second step and the third step may be stably performed without process troubles, and high-quality refined oil in which a content of impurities is minimized may be obtained. The refined oil has an extremely low content of impurities, and may contain 5 ppm (weight) or less of chlorine, 10 ppm (weight) or less of nitrogen, and 10 ppm (weight) or less of a metal.

The weak acid site catalyst to which impurities such as chlorine and metals are adsorbed may be regenerated through a heat treatment such as sintering at a high temperature of 300°C or higher. According to an exemplary embodiment, the first reactor may include a plurality of reactors. A process of the first step of improving low-temperature properties by supplying pyrolysis oil through one first reactor may be continuously performed, and after a certain period of time, a process of the first step of switching the first reactor to another first reactor and supplying pyrolysis oil may be continuously performed. In one first reactor with reduced activation, the weak acid site catalyst may be regenerated through a heat treatment at a high temperature as described above, and the first reactor containing the regenerated weak acid site catalyst may be switched again and then the process of the first step may be performed.

In an exemplary embodiment of the present disclosure, the first temperature may be 250 to 450°C. The degree of double bond movement may be controlled by the reaction temperature. For example, as the reaction temperature increases to about 250°C or higher, the double bond position movement reaction also increases, and when the reaction temperature is about 350°C or higher, the structural isomerization reaction may also occur. In addition, when the reaction temperature is about 250°C or higher, chlorine or metals may be effectively removed, and as the temperature increases, the effect of removing chlorine or metal impurities may be excellent. In a temperature range of 450°C or higher, a cracking reaction also occurs additionally. The cracking reaction mainly refers to a beta-scission reaction by a catalyst, and accordingly, a decrease or change in molecular weight distribution occurs. Specifically, the first temperature may be 270 to 400°C, and more specifically, may be 300 to 375°C.

In an exemplary embodiment of the present disclosure, alpha-olefins in the waste plastic pyrolysis oil may be converted into internal olefins or branched olefins through the first step, and a weight loss during the conversion may be 5% or less. As described above, in the above temperature range, the double bond position movement reaction or the structural isomerization reaction may occur, and the alpha-olefins in the pyrolysis oil may be converted into internal olefins. As the reaction is allowed to proceed in the above temperature range, side reactions such as a cracking reaction may be suppressed to minimize a decrease or change in molecular weight distribution, and a weight loss (weight reduction) during the conversion may be 5% or less. Specifically, the weight loss may be 3 wt% or less, and more specifically, 2 wt% or less.

In an exemplary embodiment of the present disclosure, the first step may be performed under conditions of a reaction pressure of 5 to 70 bar and a gas/oil ratio (GOR) of 100 to 3,000 in an inert atmosphere. In a high pressure condition of 70 bar or more, the reaction activity is reduced. On the other hand, a loss of the feedstock may occur at a low reaction pressure of 5 bar or less. Therefore, it is preferable to control the pressure to an appropriate range. The isodewaxing (IDW) reaction may be allowed to proceed in an inert atmosphere without supplying hydrogen required in a common skeletal isomerization reaction. A flow rate of an inert carrier gas is one of the factors for controlling the reaction activity. Since the reaction occurs by contact between the catalyst and the reactant, a retention time may be considered to control the reaction. When the flow rate of the inert carrier gas increases, the retention time between the catalyst and the reactant is shortened, and therefore, the double bond position movement reaction occurs relatively less, but the possibility of side reactions such as skeletal isomerization and cracking reactions is relatively reduced. On the other hand, when the flow rate of the inert carrier gas decreases, the double bond position movement reaction occurs relatively frequently, but the amount of by-products by the side reactions may also relatively increase. In particular, when a temperature of the double bond movement reaction is high, the tendency of side reactions may increase, and thus, it is preferable to control the flow rate of the inert carrier gas to an appropriate range. Specifically, the reaction pressure may be 5 to 50 bar (more specifically, 10 to 40 bar), and the GOR may be 400 to 2,500 (more specifically, 500 to 2,000).

In the continuous refining method of waste plastic pyrolysis oil, after the first step, impurities in chlorine and metals in the pyrolysis oil may be effectively removed through the second step of introducing a product in the first step into a second reactor and hydrotreating the product at a second temperature in the presence of a hydrotreating catalyst to allow a dechlorination reaction to proceed, and the third step of introducing a product in the second step into a third reactor and hydrotreating the product at a third temperature in the presence of a hydrotreating catalyst to allow a denitrification reaction to proceed. As described above, waste plastic pyrolysis oil having a pour point improved to 0°C or lower and reduced impurities, which is the product in the first step, is introduced as a feedstock in the second step and the third step, such that process troubles during the hydrotreating process may be minimized, and the operational stability may be improved. As waste plastic pyrolysis oil whose pour point is improved to 0°C or lower is introduced, the low-temperature properties are improved, such that even when the hydrotreating process is performed under milder conditions, the impurities may be effectively removed, and the apparatus may be stably operated for a long time.

The type of each component removed during the hydrotreating in the second step and the third step may be determined by the reaction temperature. The hydrotreating in the second step may be performed at the second temperature to mainly remove chlorine, and the hydrotreating in the third step may be performed at the third temperature higher than the second temperature to mainly remove nitrogen.

The hydrotreating in the second step and the hydrotreating in the third step are performed continuously, and nitrogen is mainly removed in the third step after chlorine is first removed in the second step, such that production and accumulation of an ammonium salt (NH₄Cl) in the reactor may be minimized, and thus, blockage of the reactor may be prevented. In addition, as described above, as the content of chlorine is further reduced in the waste plastic pyrolysis oil whose pour point is improved to 0°C or lower, which is the product in the first step, subsequent hydrotreating is performed in the second step and the third step, such that blockage of the reactor or pipe may be further prevented, and thus, the operational stability may be significantly improved.

In an exemplary embodiment of the present disclosure, the second temperature may be higher than 100°C and lower than 300°C, and the third temperature may be higher than 300°C and lower than 450°C. When the hydrotreating is performed in the second temperature range, chlorine may be intensively removed, and olefins may also be effectively removed. The second temperature may be 120 to 250°C, and more specifically, may be 150 to 230°C. When the hydrotreating is performed in the third temperature range, nitrogen may be intensively removed, and other impurities such as chlorine, sulfur, and oxygen may also be removed. Specifically, the third temperature may be 350 to 420°C, and more specifically, may be 370 to 400°C. A difference between the second temperature and the third temperature may be 50 to 350°C, specifically, 50 to 280°C, and more specifically, 50 to 200°C.

Specifically, the hydrotreating in the second step is performed at the second temperature, such that chlorine may be removed from the waste plastic pyrolysis oil, and some olefins and metal impurities may also be removed. Hydrogenation of the waste plastic pyrolysis oil occurs in the presence of the hydrotreating catalyst, and hydrogen chloride is produced as most chlorine is removed from the waste plastic pyrolysis oil. In addition, some olefins are removed from the waste plastic pyrolysis oil, and other metal impurities are removed. As such, a fluid from which other impurities are removed and in which dechlorinated oil, hydrogen chloride, and unreacted hydrogen are contained is produced.

The hydrotreating in the third step is performed at the third temperature, such that refined oil from which nitrogen is removed may be produced from the fluid. All impurities including nitrogen, oxygen, and sulfur may be removed together with hydrogen chloride and unreacted hydrogen gas in the fluid, and a mixed gas containing hydrogen chloride, ammonia, water vapor, hydrogen sulfide, and the like may be produced. The mixed gas may be discharged and removed, and the refined oil may be recovered by gas-liquid separation from the mixed gas.

In an exemplary embodiment of the present disclosure, a reaction pressure in the hydrotreating in each of the second step and the third step may be less than 100 bar. Under a high pressure condition of 100 bar or more, production of an ammonium salt (NH₄Cl) is promoted, and under a condition in which a pressure is too low, impurities including chlorine and nitrogen may not be effectively removed. Specifically, the reaction pressure may be 30 bar to 90 bar, and more specifically, may be 50 bar to 80 bar.

In an exemplary embodiment of the present disclosure, a ratio of liquid hourly space velocities (LHSVs) in the hydrotreating in the second step and the hydrotreating in the third step may be 1:0.1 to 1:0.8, preferably 1:0.2 to 1:0.7, more preferably 1:0.3 to 1:0.7. When this is satisfied, the impurities may be effectively removed by the hydrotreating of each of the second step and the third step, the activity of the hydrotreating catalyst may be maintained at high activity for a long period of time, and the process efficiency may be improved.

As the hydrotreating catalyst, various types of known catalysts may be used as long as they are catalysts for performing hydrogenation in which hydrogen is added to the hydrocarbon oil of the waste plastic pyrolysis oil. As a specific example, the hydrotreating catalyst may include one or two or more selected from a hydrodesulfurization catalyst, a hydrodenitrogenation catalyst, a hydrodechlorination catalyst, and a hydrodemetallization catalyst. Such a catalyst allows a demetallization reaction to proceed and allows a denitrification reaction or a dechlorination reaction to proceed at the same time according to conditions such as the temperature described above. As a specific example, an active metal having a hydrotreating catalytic ability may be contained, and preferably, an active metal may be supported on a support. As the active metal, any active metal may be used as long as it has a required catalytic ability, and for example, the active metal may include one or more selected from molybdenum and nickel. As the support, any support may be used as long as it is durable enough to support an active metal, and for example, the support may include one or two or more selected from a metal including one or two or more selected from silicon, aluminum, zircon, sodium, and manganese titanium; an oxide of the metal; and a carbon-based material including one or two or more selected from carbon black, activated carbon, graphene, a carbon nanotube, and graphite. As a specific exemplary embodiment, the hydrotreating catalyst may be a catalyst in which an active metal containing 0.1 to 10 wt% of nickel and 0.1 to 30 wt% of molybdenum with respect to a total weight of the hydrotreating catalyst is supported on a support.

The refined oil finally obtained through the continuous refining method of waste plastic pyrolysis oil may have an extremely low content of impurities, and may contain, for example, 5 ppm (weight) or less of chlorine, 10 ppm (weight) or less of nitrogen, 10 ppm (weight) or less of a metal, 10 ppm (weight) or less of sulfur, 0.1 wt% or less of oxygen, 10 vol% or less of olefins, and 0.2 vol% or less of conjugated diolefins.

In addition, the present disclosure provides an apparatus for carrying out a method of the invention for continuously refining waste plastic pyrolysis oil, the apparatus including: a first reactor configured to continuously receive waste plastic pyrolysis oil and allow the waste plastic pyrolysis oil to undergo an isodewaxing (IDW) reaction at a first temperature in the presence of a weak acid site catalyst to obtain a fluid first intermediate product; a second reactor configured to receive a first intermediate product from the first reactor and hydrogen gas and to allow the first intermediate product to undergo hydrotreating at a second temperature in the presence of a hydrotreating catalyst to produce a fluid second intermediate product from which chlorine is removed; and a third reactor configured to receive the second intermediate product from the second reactor and hydrogen gas and to allow hydrotreating of the second intermediate product at a third temperature higher than the second temperature to produce refined oil from which impurities are removed. As illustrated in FIG. 1, through the first reactor, the second reactor, and the third reactor, a pour point of pyrolysis oil may be improved to 0°C or lower, impurities such as chlorine and metals may be reduced, and operational stability may be improved by preventing process troubles.

The first reactor may be a fixed bed reactor. The fixed bed reactor has an advantage of high productivity and may be operated in a continuous mode. The first reactor may include an inlet, waste plastic pyrolysis oil may be introduced into the fixed bed reactor filled with a weak acid site catalyst, and an isodewaxing reaction may be performed by controlling reaction conditions.

An inert carrier gas may be supplied into the fixed bed reactor. As the inert carrier gas, for example, various carrier gases known in the art, such as nitrogen, argon, helium, and a mixture thereof, may be selected and supplied without particular limitation, and specifically, nitrogen gas may be supplied.

The first reactor may include a plurality of reactors. The plurality of first reactors may be arranged in parallel, and the process of the first step of improving low-temperature properties by supplying waste plastic pyrolysis oil as a feedstock to one first reactor may be performed. After a certain period of time, the process of the first step of switching the first reactor to another first reactor and supplying waste plastic pyrolysis oil as a feedstock may be continuously performed. In one first reactor with reduced activation, the weak acid site catalyst may be regenerated through a heat treatment at a high temperature, and the first reactor containing the regenerated weak acid site catalyst may be switched again and then the process of the first step may be continuously performed.

The first reactor is connected to the second reactor through a first pipe, and waste plastic pyrolysis oil is introduced from the first reactor to the second reactor through the first pipe. As the first reactor includes the plurality of reactors, the first pipe also includes a plurality of pipes, and as the first reaction is switched, pyrolysis oil having improved low-temperature properties is continuously introduced into the second reactor through the first pipe coupled to the switched first reactor.

A second reaction zone provided with a hydrotreating catalyst exists in the second reactor. The waste plastic pyrolysis oil and hydrogen gas are introduced into the reaction zone and hydrotreating is performed at the second temperature, such that chlorine may be removed from the waste plastic pyrolysis oil, and some olefins and metal impurities may also be removed.

The second reactor may not include an additional gas outlet, and accordingly, the fluid containing dechlorinated oil, and unreacted hydrogen, which is the product in the second reactor, hydrogen chloride, may be introduced into the third reactor as it is.

The second reactor is connected to the third reactor through a second pipe, and the product is introduced from the second reactor to the third reactor through the second pipe.

A third reaction zone provided with a hydrotreating catalyst exists in the third reactor. The fluid and hydrogen gas are introduced into the third reaction zone from the second reactor, and hydrotreating is performed at the third temperature, such that impurities may be removed from the fluid.

The third reactor may be provided with a gas outlet through which a mixed gas is discharged at an upper portion of the third reaction zone, and may be provided with an oil outlet through which refined oil from which impurities are removed is discharged at a lower portion of the third reaction zone. The mixed gas in the fluid subjected to hydrotreating at the third temperature is discharged through the gas outlet, such that refined oil from which impurities are removed may be produced.

In addition to what is explicitly described in the context of the apparatus of the invention, reference for description of further elements such as catalysts, reaction pressures and temperatures, etc., can be made to the above description of the method of the invention.

Hereinafter, the present disclosure will be described in detail with reference to Examples.

### Example 1

A mixture of hydrocarbon oils containing a high concentration of impurities including 1,000 ppm of nitrogen (N), 700 ppm of chlorine (Cl), and 35 ppm of a metal (M) was prepared as a waste plastic pyrolysis oil feedstock. It was confirmed through Simidist analysis that 20 wt% of Naphtha (bp < 180°C, to C8), 28 wt% of KERO, 16 wt% of LGO, and 36 wt% of VGO were included in the mixture of hydrocarbon oils, and it was confirmed through Br Index analysis that all olefins were included in an amount of 40 vol% of the total oil and the pour point was 37°C.

Waste plastic pyrolysis oil was introduced into a first reactor and an isodewaxing (IDW) reaction was allowed to proceed. Specifically, 6 g of an alumina catalyst (trade name "SA6275" available from Saint-Gobain NorPro Corporation) was introduced into the first reactor, the top and the bottom of the catalyst were closed with glass wool, the remaining portion of the reactor was filled with silica beads, and then a thermocouple was mounted so as to be in contact with the portion of the reactor filled with the catalyst. At this time, as the alumina, alumina having a BET specific surface area of 260 m²/g, an average pore size of 10 nm, and a total pore volume of 0.83 cc/g was used.

Under conditions of N₂ at 5 bar, the temperature of the reactor was raised at a rate of 5°C/min and maintained at 250°C for 3 hours to remove water or adsorbed gas present on a surface of the catalyst. Thereafter, the temperature was lowered to 250°C, waste plastic pyrolysis oil was introduced at a gas/oil ratio (GOR) of 700, and the reactor was operated at a weight hourly space velocity (WHSV) of 1 hr⁻¹ to allow an isodewaxing (IDW) reaction to proceed.

The isodewaxing (IDW) reaction product produced in the first reactor was introduced into a second reactor, and then the isodewaxing (IDW) reaction product was hydrotreated. NiMo/γ-Al₂O₃ and CoMo/γ-Al₂O₃ as hydrotreating catalysts were provided inside the second reactor, each of the waste plastic pyrolysis oil and hydrogen gas was introduced into the second reactor from the first reactor, and hydrotreating was performed under conditions of 250°C, 80 bar, a H₂/Oil ratio of 840, and LHSV of 0.4 h⁻¹, thereby producing hydrogen chloride as a by-product while removing chlorine components from the waste plastic pyrolysis oil. In addition, olefins, metal impurities, and the like in addition to the chlorine components were removed from the waste plastic pyrolysis oil by the above reaction.

A fluid containing the waste plastic pyrolysis oil from which the chlorine components were removed, hydrogen chloride, and unreacted hydrogen gas produced in the second reactor was introduced into a third reactor, and then the fluid was hydrotreated.

The same hydrotreating catalyst as that in the second reactor was provided inside the third reactor, each of the fluid and hydrogen gas was introduced into the third reactor, and the fluid was hydrotreated under conditions of 370°C, 85 bar, a H₂/Oil ratio of 840, and LHSV of 0.7 h⁻¹, thereby producing ammonia as a by-product while removing nitrogen components from the fluid. In addition to the nitrogen components, other remaining impurities such as trace amounts of chlorine components, sulfur components, and oxygen components that were not removed were removed together.

In addition, the mixed gas containing ammonia, a trace amount of unremoved hydrogen chloride, water, hydrogen sulfide, and hydrogen present in the third reactor was discharged through a gas outlet of the third reactor, and refined oil from which impurities were removed was recovered through an oil outlet of the third reactor.

### Examples 2 to 4

Refined oil from which impurities were removed was recovered in the same manner as that of Example 1, except that the temperature and pressure of each reactor are operated under the conditions described in Table 1.

### Example 5

Refined oil from which impurities were removed was recovered in the same manner as that of Example 1, except that the second reactor was operated at 160°C and 85 bar and the third reactor was operated at 320°C and 90 bar.

### Example 6

Refined oil from which impurities were removed was recovered in the same manner as that of Example 1, except that the first reactor was operated at 500°C.

### Example 7

Refined oil from which impurities were removed was recovered in the same manner as that of Example 1, except that the reaction conditions of the second reactor were set to be the same as those of the third reactor.

### Comparative Example 1

Refined oil from which impurities were removed was recovered in the same manner as that of Example 1, except that waste plastic pyrolysis oil that has not undergone an isodewaxing (IDW) reaction was used as the waste plastic pyrolysis oil to be introduced into the second reactor.

### Comparative Example 2

Refined oil from which impurities were removed was recovered in the same manner as that of Example 1, except that zeolite as a strong acid point catalyst was used as the isodewaxing (IDW) reaction catalyst. As the zeolite catalyst, HZSM-5 obtained by subjecting NH₃ZSM-5 (CBV2314, Zeolyst Co.) to a heat treatment at 550°C for 4 hours was used.

### Evaluation Examples

The pour point, the selectivity of the double bond position movement reaction, and the occurrence of the side reactions of the waste plastic pyrolysis oil as the isodewaxing (IDW) reaction product were analyzed by Simidist and GC-MS. In addition, the pour point after the hydrogenation reaction was measured to evaluate the effect of the hydrogenation reaction on the pour point.

The content (ppm) of chlorine (Cl) and the content (ppm) of nitrogen (N) in the finally recovered waste plastic pyrolysis oil were measured by ICP and XRF analysis methods.

While the apparatus was continuously operated to continuously refine the waste plastic pyrolysis oil, the process stability was evaluated by checking the frequency of process troubles due to an increase in differential pressure (DP) and blockage of the reactor caused by solidification of the raw materials and reactants. Specifically, the process of continuously operating the apparatus for continuous refining for 30 days was repeated 5 times to measure an average number of occurrences of process troubles. When the average value is measured with a decimal point, it is indicated by rounding up.

The measurement results are shown in Table 1.

**[Table 1]**

| | | Example 1 | Example 2 | Example 3 | Example 4 | Example 5 | Example 6 | Example 7 | Comparative Example 1 | Comparative Example 2 (Strong acid point) |
|---|---|---|---|---|---|---|---|---|---|---|
| First reactor | Temperature (°C) | 250 | 320 | 380 | 450 | 250 | 500 | 250 | - | 250 |
| Second reactor | Temperature (°C) | 250 | 250 | 160 | 160 | 160 | 250 | 370 | 250 | 250 |
| | Pressure (bar) | 80 | 80 | 85 | 85 | 85 | 80 | 85 | 80 | 80 |
| Third reactor | Temperature (°C) | 370 | 370 | 320 | 320 | 320 | 370 | 370 | 370 | 370 |
| | Pressure (bar) | 85 | 85 | 90 | 90 | 90 | 85 | 85 | 85 | 85 |
| Pour point₁ | | 8 | 3 | -7 | -15 | 9 | -25 | 8 | 37 | 9 |
| Pour point₂ | | 9 | 4 | -5 | -13 | 10 | -27 | 9 | 38 | 11 |
| Weight reduction (wt%) | | 1 | 2 | 10 | 16 | 1 | 36 | 10 | 1 | 12 |
| Cl₀ (ppm) | | 700 | | | | | | | | |
| Cl₁ (ppm) | | 663 | 632 | 583 | 529 | 655 | 470 | 657 | 700 | 626 |
| M₀ (ppm) | | 35 | | | | | | | | |
| M₁ (ppm) | | 2 | 2 | < 1 | < 1 | 2 | < 1 | 2 | 35 | 3 |
| Average number of occurrences of process troubles (n/30 day) | | 5 | 3 | 2 | 1 | 5 | 1 | 9 | 12 | 8 |
| | | | | | | | | | | |
| - Pour point : Pour point of waste plastic pyrolysis oil immediately after passing through first reactor | | | | | | | | | | |
| - Pour point₂: Pour point of refined oil passed through entire refining process | | | | | | | | | | |
| - Cl₀: Content of chlorine in waste plastic pyrolysis oil feedstock | | | | | | | | | | |
| - Cli: Content of chlorine in waste plastic pyrolysis oil immediately after passing through first reactor | | | | | | | | | | |
| - M₀: Content of metal in waste plastic pyrolysis oil feedstock | | | | | | | | | | |
| - Mi: Content of metal in waste plastic pyrolysis oil immediately after passing through first reactor | | | | | | | | | | |

### Pour Point

It was confirmed that the pout point of the waste plastic pyrolysis oil feedstock was 37°C, which was high, but the pour point was improved to 8°C through the isodewaxing reaction at the reaction temperature of 250°C in Example 1. In addition, through Examples 2 to 4, it could be confirmed that the pour point gradually decreased as the reaction temperature increased. It could be confirmed that the pour point was 3°C at the reaction temperature of 320°C at which a skeletal isomerization reaction was initiated, and at the reaction temperatures of 380°C and 450°C, which were accompanied by more active skeletal isomerization and cracking reactions, the pour points were significantly reduced to -7°C and -15°C, respectively.

In addition, comparing the pour points before and after the hydrotreating process in Examples 1 to 5, it was confirmed that the hydrotreating process did not significantly affect the pour point of the pyrolysis oil.

### Weight Reduction

It could be confirmed that, at 320°C or lower, only the double bond position movement in the molecular structure occurred, and then, in the reaction temperature range of higher than 320°C, the skeletal isomerization reaction occurred, resulting in a weight reduction of 2 wt%. It could be confirmed that, after 380°C, side reactions such as a cracking reaction occurred and a weight reduction gradually increased, and in particular, it could be confirmed that, at 500°C in Example 6, a weight reduction occurred by 36 wt% or more, which was not preferable.

### Content of Chlorine and Metals/Average Number of Occurrences of Process Troubles

In Example 1, it could be confirmed that the content of chlorine in the waste plastic pyrolysis oil immediately after passing through the first reactor was reduced to a certain level to 663 ppm. In addition, in Examples 2 to 4, it could be confirmed that the chlorine reduction effect was greater as the first step, which was the isodewaxing process, was performed at a higher temperature, and in Example 4, when the isodewaxing process was performed at 450°C, the content of chlorine was measured to be 529 ppm, and thus, it could be confirmed that the content of chlorine was reduced by about 100 ppm or more through the isodewaxing process.

In particular, in all of Examples 1 to 5, it could be confirmed that the content of metals in the waste plastic pyrolysis oil immediately after passing through the first reactor was measured to be 2 ppm or less, which showed that most of the metal impurities were reduced to a level of several ppm through the isodewaxing process, and therefore, it could be appreciated that the metal removal effect was remarkably excellent. On the other hand, in Comparative Example 1, it could be confirmed that when the isodewaxing process was omitted, the contents of chlorine and metals were not reduced at all, and as a result, it could be confirmed that the average number of occurrences of process troubles was 12, which was relatively high.

In Example 7, it could be confirmed that the average number of occurrences of process troubles was 9, which was relatively high, and was mainly caused by the blockage of the reactor due to an ammonium salt (NH₄Cl) produced by performing hydrotreating under severe conditions of 370°C and 85 bar in both of the second reactor and the third reactor.

In Comparative Example 2, it could be confirmed that as the strong acid point catalyst was used, the catalytic deactivation occurred, and the average number of occurrences of process troubles was 8, which was relatively higher than those of Examples 1 to 5.

To summarize, the method and apparatus of the present invention may minimize process troubles occurring in the pyrolysis oil refining process and may improve operational stability. They may effectively reduce impurities such as chlorine and metals contained in the pyrolysis oil. They may improve the pour point to 0°C or lower by inducing only the isomerization reaction without reducing or changing the molecular weight distribution of the waste plastic pyrolysis oil, and may produce a high-value-added oil having excellent low-temperature fluidity.

## Claims

1. A method for refining waste plastic pyrolysis oil, comprising a continuous flow of waste plastic pyrolysis oil through the following steps:
a first step of introducing waste plastic pyrolysis oil into a first reactor and allowing an isodewaxing (IDW) reaction to proceed at a first temperature in the presence of a weak acid site catalyst, to obtain a first intermediate product;
a second step of introducing the first intermediate product into a second reactor and hydrotreating the first intermediate product at a second temperature in the presence of a hydrotreating catalyst to allow a dechlorination reaction to proceed, to obtain a second intermediate product; and
a third step of introducing the second intermediate product into a third reactor and hydrotreating the second intermediate product at a third temperature in the presence of a hydrotreating catalyst to allow a denitrification reaction to proceed, to obtain a refined waste plastic pyrolysis oil.

2. The method of claim 1, wherein the waste plastic pyrolysis oil has a pour point of 10°C or higher, and includes 30 wt% or more of C10+ hydrocarbon oils having a boiling point of 180°C or higher and 30 vol% or more of olefins.

3. The method of any preceding claim, wherein the first step is controlled such that a pour point of the first intermediate product is -20 to 0°C.

4. The method of any preceding claim, wherein the weak acid site catalyst includes at least one catalyst selected from γ-Al₂O₃, Kaoline, TiO₂, and ZrO₂.

5. The method of any preceding claim, wherein the weak acid site catalyst has a BET specific surface area of 200 m²/g or more as determined according to ASTM D4567-03(2008), an average pore size of 5 nm or more as determined according to ASTM D4641-12, and/or a total pore volume of 0.5 cc/g or more as determined according to ASTM D4365-19.

6. The method of any preceding claim, wherein the first temperature is 250 to 450°C.

7. The method of any preceding claim, wherein the first step is performed under conditions of a reaction pressure of 5 to 70 bar and a gas/oil ratio (GOR) of 300 to 3,000 under an inert atmosphere.

8. The method of any preceding claim, wherein the second temperature is 100 to 300°C.

9. The method of any preceding claim, wherein the third temperature is 300 to 450°C.

10. The method of any preceding claim, wherein a reaction pressure in the hydrotreating the second step, the third step, or both the second and third steps, is less than 100 bar.

11. The method of any preceding claim, wherein a ratio of liquid hourly space velocities (LHSVs) in the hydrotreating in the second step, the hydrotreating in the third step, or the hydrotreating in both the second and third steps is 1:0.1 to 1:0.8.

12. An apparatus for carrying out a method of any preceding claim for continuously refining waste plastic pyrolysis oil, the apparatus comprising:
a first reactor configured to continuously receive waste plastic pyrolysis oil and allow the waste plastic pyrolysis oil to undergo an isodewaxing (IDW) reaction at a first temperature in the presence of a weak acid site catalyst;
a second reactor configured to continuously receive a first intermediate product from the first reactor through a first pipe and hydrogen gas and to allow the first intermediate product to undergo dechlorination by hydrotreating at a second temperature in the presence of a hydrotreating catalyst; and
a third reactor configured to continuously receive a second intermediate product from the second reactor through a second pipe and hydrogen gas and to allow the second intermediate product to undergo denitrification by hydrotreating at a third temperature in the presence of a hydrotreating catalyst.

13. The apparatus of claim 12, wherein the first reactor is a fixed bed reactor filled with the weak acid site catalyst.

14. The apparatus of claim 12 or 13, wherein the second reactor and the third reactor are fixed bed reactors filled with the hydrotreating catalyst.
